# EUROPÄISCHE PATENTSCHRIFT

(11) **EP 4 148 616 B1**
(45) Veröffentlichungstag und Bekanntmachung des Hinweises auf die Patenterteilung: **16.08.2023**
(21) Anmeldenummer: 21195872.3
(22) Anmeldetag: 10.09.2021
(51) Int. Cl.: G06K 7/10

(54) **KOMMUNIZIEREN MIT EINEM RFID-TRANSPONDER**
COMMUNICATION WITH AN RFID TRANSPONDER
COMMUNICATION AVEC UN TRANSPONDEUR RFID

(43) Veröffentlichungstag der Anmeldung: 15.03.2023
(73) Patentinhaber: SICK AG, 79183 Waldkirch (DE)
(72) Erfinder: Fislage, Michael, 74211 Leingarten (DE); Struve, Dirk, 22177 Hamburg (DE)

(56) Entgegenhaltungen:
- US-A1- 2006 006 986
- US-A1- 2006 186 999
- US-A1- 2006 238 303

## Beschreibung

Die Erfindung betrifft eine RFID-Vorrichtung und ein Verfahren zum Kommunizieren mit mindestens einem RFID-Transponder nach dem Oberbegriff von Anspruch 1 beziehungsweise 13.

RFID-Systeme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung, Lagerung und Sortierung von Gütern und Produkten zu steuern.

Die RFID-Transponder werden durch elektromagnetische Strahlung des Schreib-Lesesystems, auch Interrogator genannt, zur Abstrahlung der gespeicherten Information angeregt, wobei passive Transponder die notwendige Energie aus der Sendeenergie des Lesesystems beziehen und die weniger üblichen aktiven Transponder dafür eine eigene Versorgung besitzen. In dem etablierten Ultrahochfrequenzstandard EPC Generation-2 UHF RFID, dessen Luftschnittstelle in ISO180000-6 definiert ist, werden passive Transponder nach dem Backscatter-Verfahren ausgelesen.

Eine RFID-Vorrichtung kommuniziert in verschiedenen Frequenzkanälen innerhalb eines für RFID zulässigen Frequenzbandes. Der für eine konkrete Kommunikation genutzte Frequenzkanal wird jeweils dynamisch bestimmt, um anderen Signalen ausweichen zu können, insbesondere die Kommunikation mit verschiedenen RFID-Transpondem zu ermöglichen. Herkömmlich wird die Sendeenergie der RFID-Vorrichtung einheitlich so eingestellt, dass eine Kommunikation mit einem RFID-Transponder in allen verfügbaren Frequenzkanälen bis zur angestrebten Lesereichweite möglich ist. Das geschieht unter der Randbedingung, dass die maximale erlaubte Sendeleistung nicht überschritten wird.

Tatsächlich sind aber die effektive Sendeleistung und damit Sendeintensität sowie die Empfangsintensität aufgrund der Charakteristiken der beteiligten Antennen von RFID-Vorrichtung und RFID-Transponder frequenzabhängig, weichen also von Frequenzkanal zu Frequenzkanal stark voneinander ab. Dem wird die unabhängig vom Frequenzkanal fest eingestellte Sendeenergie nicht gerecht. Dies ist ein bislang unbeachteter und nicht kompensierter Effekt.

Damit verbinden sich zahlreiche Probleme. Zum einen führt eine feste Sendeleistung zu unterschiedlichen Lesereichweiten der Frequenzkanäle. Je nachdem, an welchen Frequenzkanal die feste Sendeleistung angepasst ist, gibt es dann zu schwache oder zu starke Frequenzkanäle. In einem zu schwachen Frequenzkanal können RFID-Transponder nicht über die ganze vorgesehene Reichweite gelesen werden. In einem zu starken Frequenzkanal wiederum erzeugt die zugunsten der schwachen Frequenzkanäle übertriebene Sicherheitsmarge eine zusätzliche Überreichweite, unter der womöglich unerwünschte ferne RFID-Transponder erfasst werden oder Wechselwirkungen mit benachbarten Geräten erzeugt oder verstärkt werden. Ferner wird in manchen RFID-Systemen die empfangene Signalstärke (RSSI, Received Signal Strength Indicator) für eine Abstandsbestimmung und Zuordnung herangezogen. Eine Verfälschung der Signalstärke durch den Frequenzkanal bildet hier eine zusätzliche Fehlerquelle.

Die US 2006/0186999A1 offenbart ein RFID-System, das für Lese- und Schreiboperationen unterschiedliche Signalstärken verwendet. Die jeweiligen Signalstärken können automatisch oder durch Benutzervorgabe gesetzt werden. Das RFID-System kann verschiedene Protokolle unterstützen.

Aus der US 2006/0006986 A1 ist ein Multiprotokoll-RFID-System bekannt. Durch Verwendung verschiedener Protokolle können mehrere nebeneinander angeordnete Lesesysteme koexistieren.

In der US 2006/0238303 A1 wird ein RFID-Leser vorgestellt, dessen Konfiguration an die Umgebung, die Umgebung des Tags oder eine gelesene Information angepasst wird. Zu den Anpassungen zählen Frequenz, Leistung und Protokoll.

Es ist daher Aufgabe der Erfindung, die Anpassung einer RFID-Vorrichtung zu verbessern.

Diese Aufgabe wird durch eine RFID-Vorrichtung und ein Verfahren zum Kommunizieren mit mindestens einem RFID-Transponder nach Anspruch 1 beziehungsweise 13 gelöst. Die RFID-Vorrichtung wird auch als Interrogator, RFID-Leser oder RFID-Schreib-Lesevorrichtung bezeichnet, denn vorzugsweise ist eine RFID-Vorrichtung zum Lesen wie zum Schreiben in der Lage. Ein Sender sendet über eine Sendeantenne ein Sendesignal aus, das von einem Empfänger über eine Empfangsantenne wieder empfangen wird. Sender und Empfänger können gemeinsam als Transceiver ausgebildet sein, und es kann eine gemeinsame Sende-Empfangsantenne vorgesehen sein.

Eine Steuer- und Auswertungseinheit wählt für ein jeweiliges ausgesandtes und wieder empfangenes RFID-Signal einen von mehreren Frequenzkanälen aus. Die insgesamt verfügbaren Frequenzkanäle sind regulatorisch, technisch und womöglich auch anwendungsspezifisch vorgegeben. Vorzugsweise werden durch das Aussenden und Empfangen des RFID-Signals Informationen mit dem RFID-Transponder ausgetauscht, d.h. es wird eine RFID-Information in das ausgesandte RFID-Signal eincodiert, die dem RFID-Transponder mitgeteilt oder dort gespeichert werden soll oder mit der eine bestimmte Anforderung gestellt wird, beziehungsweise eine RFID-Information des RFID-Transponders aus dem empfangenen RFID-Signal ausgelesen. Das Sendesignal dient insbesondere bei UHF RFID der Versorgung des RFID-Transponders, der das rückgesendete RFID-Signal mit einer angefragten Information modifiziert.

Die Erfindung geht von dem Grundgedanken aus, über die verschiedenen Frequenzkanäle hinweg eine vergleichbare Intensität zu erzielen. Dazu wird je nach Frequenzkanal eine Intensitätsanpassung des RFID-Signals vorgenommen. Intensität ist hier ein stellvertretend gewählter Begriff, der alternative Beschreibungen der Signalstärke über eine Amplitude des RFID-Signals, eine Sende- und/oder Empfangsleistung und sonstige derartige gleichwertige physikalische Größen mit umfasst. Die Steuer- und Auswertungseinheit kennt vorzugsweise die relativen Unterschiede in den Intensitäten der Frequenzkanäle beziehungsweise entsprechende Korrekturwerte zur Intensitätsanpassung, und dies gruppenweise für mehrere ähnliche Frequenzkanäle bis hin zu individuell für jeden Frequenzkanal. Die Intensitätsanpassung erfolgt je nach Ausführungsform auf verschiedenen Wegen, die miteinander kombinierbar sind, beispielsweise sende- und/oder empfangsseitig, physisch und/oder rechnerisch sowie abhängig von einer Antennencharakteristik der RFID-Vorrichtung und/oder des RFID-Transponders.

Die Erfindung hat den Vorteil, dass die Reichweite über alle Frequenzkanäle ähnlicher oder gleich wird. Es gibt weniger Wechselwirkungen mit systemfremden RFID-Vorrichtungen, RFID-Transpondern oder sonstigen Systemen. Die Sendeleistung lässt sich nun viel gezielter anpassen, so dass nur noch so viel Leistung verwendet wird, wie nötig und nicht mehr, wie möglich beziehungsweise erlaubt. Filterungen oder Zuordnungen, die auf der Signalstärke beruhen, werden verlässlicher. Die genannten Vorteile zeigen sich umso stärker bei schmalbandigen Antennen der RFID-Vorrichtung beziehungsweise des RFID-Transponders, denn dann wären herkömmlich, ohne erfindungsgemäße Intensitätsanpassung, die Unterschiede über die Frequenzkanäle hinweg besonders ausgeprägt.

Die RFID-Vorrichtung ist bevorzugt für den UHF-Bereich nach ISO180000-6 ausgebildet. Das ist ein sich immer weiter etablierender und daher höchst relevanter Standard. Die Frequenzkanäle sind vorzugsweise im (europäischen) ETSI-Band oder im (amerikanischen) FCC-Band festgelegt. ETSI sieht 15 Kanäle je 200 KHz zwischen 865-868 MHz und FCC 52 Kanäle je 500 KHz zwischen 902-928 MHz vor. Je größer die Anzahl Frequenzkanäle und die davon insgesamt abgedeckte Bandbreite, zu umso stärkeren Abweichungen kann es ohne die erfindungsgemäße Intensitätsanpassung kommen. Die Erfindung kann ihre Stärken deshalb im FCC-Band besonders gut ausspielen.

Die Steuer- und Auswertungseinheit ist bevorzugt dafür ausgebildet, eine Sendeleistung der Sendeantenne in Abhängigkeit von einer Antennencharakteristik der Sendeantenne über die Frequenzkanäle anzupassen. Dies steht vorzugsweise noch unter der Randbedingung, die erlaubten Maximalgrenzen einzuhalten. Die Sendeantenne beziehungsweise deren Antennencharakteristik ist eine erste mögliche Quelle unterschiedlicher Intensitäten über die Frequenzkanäle. Die Eigenschaften der eigenen Sendeantenne der RFID-Vorrichtung sind aus der Entwicklung bekannt und daher unabhängig von den zu lesenden RFID-Transpondern und der Anwendungssituation kompensierbar. Dadurch wird insbesondere eine gleiche tatsächliche Sendeleistung in den unterschiedlichen Frequenzkanälen erreicht, mit anderen Worten, die Antennencharakteristik der Sendeantenne effektiv abgeflacht.

Die Steuer- und Auswertungseinheit ist bevorzugt dafür ausgebildet, eine Verstärkung des empfangenen RFID-Signals in Abhängigkeit von einer Antennencharakteristik der Empfangsantenne über die Frequenzkanäle anzupassen. Dies bezieht sich nun auf die Empfangsseite, ansonsten sind die Überlegungen zur Sendeantenne und deren Antennencharakteristik übertragbar. Gibt es eine gemeinsame Sende-Empfangsantenne, so sollte dennoch der Effekt der Antennencharakteristik beim Empfangen des RFID-Signals berücksichtigt werden.

Die Steuer- und Auswertungseinheit ist bevorzugt dafür ausgebildet, eine gemessene Intensität des empfangenen RFID-Signals anzupassen, insbesondere einen RSSI-Wert (Received Signal Strength Indicator). Dies ist nun vorzugsweise eine rechnerische Korrektur, nicht wie bisher eine physische Korrektur. Damit wird eine Verfälschung des RSSI-Werts durch den jeweils verwendeten Frequenzkanal verhindert. Filterungen und Zuordnungen, die auf dem RSSI-Wert basieren, werden dadurch verlässlicher, indem beispielsweise ein gemeinsamer Schwellwert gesetzt werden kann, dessen Über- oder Unterschreiten nicht länger vom Frequenzkanal abhängt.

Die Steuer- und Auswertungseinheit ist bevorzugt dafür ausgebildet, die Intensitätsanpassung in dem genutzten Frequenzkanal in Abhängigkeit einer Antennencharakteristik des RFID-Transponders vorzunehmen. Das von dem RFID-Transponder zurückgesandte RFID-Signal zeigt nämlich ebenfalls eine bisher im Stand der Technik nicht beachtete Abhängigkeit vom Frequenzkanal. Dies kann die RFID-Vorrichtung ausgleichen, wozu sich insbesondere jede der bisher genannten Maßnahmen oder eine beliebige Kombination davon eignet. Der RFID-Transponder weist insbesondere ein Metallsubstrat auf (on-metal), wodurch sich nicht erfindungsgemäß angepasste Intensitäten über die Frequenzkanäle besonders stark unterscheiden würden.

Die genannten Anpassungen an eine Antennencharakteristik der Sendeantenne, der Empfangsantenne, der Transponderantenne oder eine Korrektur des RSSI sind einzeln, alle gemeinsam oder in beliebigen Zwischenkombinationen möglich.

Die Steuer- und Auswertungseinheit ist bevorzugt dafür ausgebildet, mittels der Intensitätsanpassung für eine vom genutzten Frequenzkanal zumindest weitgehend unabhängige Intensität zu sorgen. Das Ziel der Intensitätsanpassung ist mit anderen Worten eine über alle Frequenzkanäle gleiche Intensität, die in der Praxis nicht perfekt erreicht werden muss oder kann. Die Intensitätsanpassung sorgt also für eine Stärkung von zuvor schwachen Frequenzkanälen und/oder Schwächung von zuvor starken Frequenzkanälen. Die Ursachen, warum Frequenzkanäle unterschiedlich schwach oder stark ausgebildet sind, können wie diskutiert bei der Sendeantenne, der Empfangsantenne und den zugeordneten analogen Schaltungen und/oder bei dem RFID-Transponder mit dessen Transponderantenne liegen. Die Intensitätsanpassung wiederum erfolgt vorzugsweise über eine der genannten Maßnahmen oder Kombinationen davon.

Die Steuer- und Auswertungseinheit ist bevorzugt dafür ausgebildet, die Intensitätsanpassung am schwächsten Frequenzkanal auszurichten. Das ist derjenige Frequenzkanal, in dem unter sonst gleichen Bedingungen das schwächste RFID-Signal empfangen beziehungsweise der geringste RSSI bestimmt sowie die geringste Lesereichweite erzielt würde. In diesem schwächsten Frequenzkanal sollte die Intensität für die vorgesehene Lesereichweite ausreichen, eine noch geringere Intensität könnte zu Leseausfällen führen. Nach dem Stand der Technik würden die anderen Frequenzkanäle mit überhöhter Intensität betrieben, um im schwächsten Frequenzkanal als Worst-Case-Szenario die Mindestreichweite zu garantieren, und dadurch eine Überreichweite mit allen einleitend genannten Problemen erzeugt. Erfindungsgemäß hingegen können die übrigen Kanäle durch Intensitätsanpassung abgeschwächt werden, um diese Probleme zu vermeiden.

Die Steuer- und Auswertungseinheit ist bevorzugt dafür ausgebildet, die Intensität des empfangenen RFID-Signals bei Kommunikation mit einem RFID-Transponder in verschiedenen Frequenzkanälen zu bestimmen. Das dient dem Einlernen oder Kalibrieren der Intensitätsanpassung beziehungsweise der Bestimmung entsprechender Korrekturwerte und geschieht vorzugsweise vorab mit einem bekannten RFID-Transponder in einer festen Lesereichweite. Die Bestimmung kann geräteindividuell oder nur allgemein für eine bestimmte Klasse von RFID-Vorrichtungen und/oder RFID-Transpondern durchgeführt werden, und dies direkt am Ort der Anwendung oder schon früher beispielsweise in der Endfertigung. Es wird ausgemessen, wie sich die Intensitäten in den Frequenzkanälen relativ zueinander verhalten. Vorzugsweise wird dazu in allen Frequenzkanälen gemessen, über die im Betrieb prinzipiell kommuniziert werden könnte. Es ist aber auch denkbar, aus weniger Frequenzkanälen zu interpolieren beziehungsweise die Abhängigkeit der Intensität von den Frequenzkanälen aus einigen Stützstellen zu schätzen. Alternativ zu einer Messung ist denkbar, die Intensitätsanpassung auf rechnerische oder durch Simulation gewonnene Vorhersagen insbesondere der Antennencharakteristiken von Sende-, Empfangs- und oder Transponderantenne zu stützen. Das Messen hat den Vorteil, dass sämtliche tatsächlichen Systemeigenschaften und bei Durchführung der Messung am Anwendungsort sogar auch anwendungsspezifische Einflussfaktoren erfasst werden.

Die Steuer- und Auswertungseinheit ist bevorzugt dafür ausgebildet, eine erforderliche Intensitätsanpassung je Frequenzkanal durch Parametrierung auf einen Typ von RFID-Transpondern zu bestimmen. Es sind demnach zu dem Typ RFID-Transponder Intensitätsanpassungen oder Korrekturwerte hinterlegt, die durch die Parametrierung ausgewählt werden. Die gespeicherten Intensitätsanpassungen können ein beliebiges Format haben, beispielsweise als funktioneller Zusammenhang von Intensitätsanpassung zu Frequenz oder als Nachschlagtabelle (LUT, Lookup Table).

Die Steuer- und Auswertungseinheit ist bevorzugt dafür ausgebildet, eine erforderliche Intensitätsanpassung je Frequenzkanal durch Auslesen von Intensitätsanpassungsinformationen aus einem RFID-Transponder zu bestimmen. Der RFID-Transponder kennt somit seine eigene Antennencharakteristik beziehungsweise die dadurch erzeugten Intensitätsunterschiede in den Frequenzkanälen und übergibt diese Information auf Anfrage der RFID-Vorrichtung. Das Format dieser Information kann wie bei der im Vorabsatz erläuterten Parametrierung je nach Ausführungsform variieren, beispielsweise eine einfache Beschreibung der Charakteristik der Transponderantenne durch wenige Parameter wie Maximum und Bandbreite oder eine vollständige Charakteristik mit einem Wert je Frequenzkanal sein, oder es werden bereits Korrekturwerte zur Angleichung zwischen den Frequenzkanälen mitgeteilt.

Für eine Parametrierung anhand eines RFID-Transpondertyps, oder damit der RFID-Transponder die erforderliche Intensitätsanpassung mitteilen kann, ist an irgendeiner Stelle vorab eine Bestimmung der relativen Stärken der Frequenzkanäle erforderlich. Dazu sind alle oben beschriebenen Möglichkeiten einschließlich der Messung oder Kalibrierung, der Modellierung und der Simulation denkbar. Das kann aber dann ausgelagert werden, beispielsweise in die Endfertigung oder sogar schon in die Entwicklung der RFI D-Vorrichtung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Dabei wird vorzugsweise vorab eine erforderliche Intensitätsanpassung je Intensitätskanal durch Ermitteln der Intensität des empfangenen RFID-Signals in verschiedenen Frequenzkanälen bestimmt. Dies geschieht vorzugsweise unter Wechsel des Frequenzkanals bei sonst gleichen Bedingungen, insbesondere in Kommunikation mit jeweils demselben RFID-Transponder in fester Position. Wie schon ausgeführt, ist dies stellvertretend für eine Klasse oder einen Typ von RFID-Vorrichtungen und/oder RFID-Transpondern, aber auch geräteindividuell oder sogar anwendungsspezifisch denkbar.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Überblicksdarstellung einer RFID-Vorrichtung mit einem RFID-Transponder in Lesereichweite;
- Fig. 2: eine beispielhafte Frequenzcharakteristik eines RFID-Transponders;
- Fig. 3: einen Vergleich der Frequenzcharakteristiken unterschiedlicher RFID-Transponder; und
- Fig. 4: eine schematische Darstellung einer Ausführungsform einer Intensitätsanpassung in verschiedenen Frequenzkanälen.

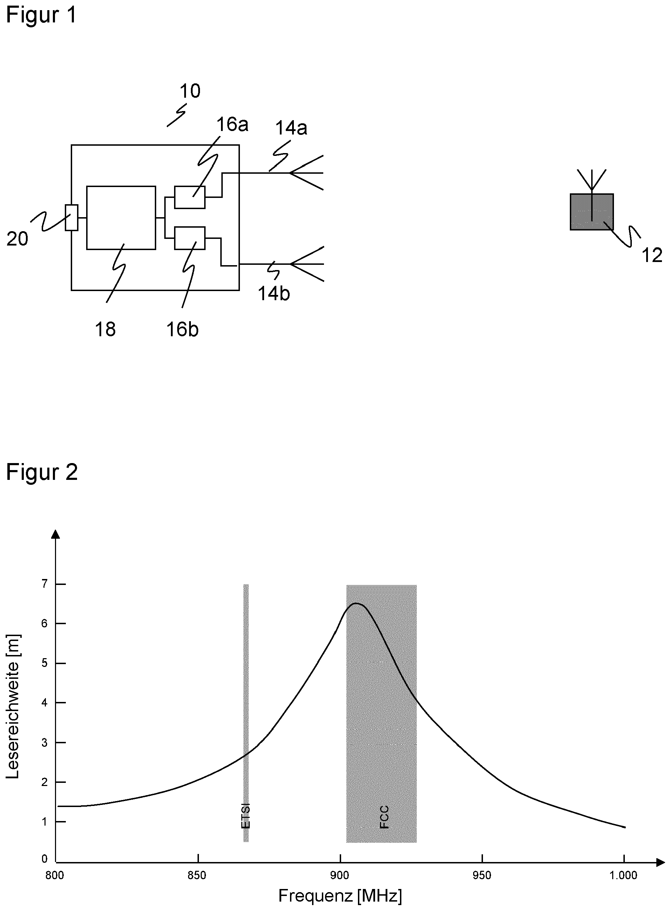

Figur 1 zeigt eine schematische Überblicksdarstellung einer RFID-Vorrichtung 10 und einen beispielhaft in deren Lesereichweite angeordneten RFID-Transponder 12. Die RFID-Vorrichtung 10 weist in dieser Ausführungsform eine jeweils separate Sendeantenne 14a und Empfangsantenne 14b auf, wobei ein Sender 16a ein RFID-Signal über die Sendeantenne 14a abstrahlt beziehungsweise ein Empfänger 16b über die Empfangsantenne 14b das RFID-Signal wieder empfängt. Die hardwareseitige Auftrennung in einen Sende- und Empfangskanal ist auch praktisch denkbar, dient aber in erster Linie der konzeptionellen Darstellung, um die sende- und empfangsseitigen Effekte separat zu erläutern. In anderen Ausführungsformen ersetzt eine gemeinsame Sende-Empfangsantenne die einzelne Sendeantenne 14a und Empfangsantenne 14b und/oder ein Transceiver den Sender 16a und Empfänger 16b.

Eine Steuerungseinheit 18, beispielsweise mit einem Digitalbaustein wie einem Mikroprozessor oder einem FPGA (Field Programmable Gate Array), steuert die Abläufe in der RFID-Vorrichtung 10 und ist in der Lage, RFID-Informationen in ein RFID-Signal zu codieren beziehungsweise eine RFID-Information aus einem RFID-Signal auszulesen. Ein drahtgebundener oder drahtloser Anschluss 20 dient dazu, die RFID-Lesevorrichtung 10 in ein übergeordnetes System einzubinden.

Im Detail erfolgt die Kommunikation vorzugsweise gemäß einem bekannten RFID-Protokoll, insbesondere ISO 18000-6 oder EPC Generation-2 UHF RFID, und die dafür erforderlichen Schritte und Komponenten sind an sich bekannt. Ebenso wird der über die groben Funktionsblöcke hinausgehende genaue Aufbau der RFID-Lesevorrichtung 10 als bekannt vorausgesetzt, die im Übrigen nur rein schematisch in dieser Form gezeigt ist und alternativ jede andere an sich bekannte Anordnung der erläuterten Elemente annehmen kann.

Eine RFID-Kommunikation erfolgt auf einem Frequenzkanal aus einer Vielzahl von Frequenzkanälen. Beispielsweise sind im ETSI-Band von 865-868 MHz 15 Frequenzkanäle und im FCC-Band von 902-928 MHz 52 Frequenzkanäle vorgesehen. Die ausgesandte und empfangene Intensität des RFID-Signals und damit die Lesereichweite variieren mit der Frequenz und unterscheiden sich daher in den Frequenzkanälen. Für dieses Frequenzverhalten gibt es mehrere mögliche Ursachen. Dazu zählt die Frequenzcharakteristik der Sendeantenne 14a, der Empfangsantenne 14b und der Transponderantenne des RFID-Transponders 12. Auch die konkrete Anwendungsumgebung sowie die Anordnungen von RFID-Vorrichtung 10 und RFID-Transponder 12 sowie dessen Material können sich auf das Frequenzverhalten auswirken.

Figur 2 zeigt beispielhaft die Lesereichweite in Abhängigkeit von der Frequenz des RFID-Signals für einen RFID-Transponder mit Metallsubstrat (on-metal) für das FCC-Band. Die maximale Lesereichweite wird mit diesem RFID-Transponder bei etwa 905 MHz erzielt, mit einer Lesereichweite von etwa 6,5 m. Für eine optimale Abstimmung mit dem FCC-Band wäre ein Maximum bei 915 MHz besser geeignet, denn die Lesereichweite sinkt am oberen Ende des FCC-Bandes auf etwa 4 m ab.

Durch herkömmliche nur pauschale Anpassung der Sendeleistung kann nur die gesamte Kurve nach oben oder unten reskaliert werden. Das führt dann entweder zu Leseausfällen in schwachen Frequenzkanälen oder zu Überreichweiten in starken Frequenzkanälen. Erfindungsgemäß hingegen ist eine Intensitätsanpassung je Frequenzkanal ermöglicht, mit der die Kurve abgeflacht wird. Damit lässt sich eine einheitliche Lesereichweite in allen Frequenzkanälen erreichen. Intensität, Signalstärke und Lesereichweite sind aneinandergekoppelt. Wenn folglich von einer Intensitätsanpassung gesprochen wird, bedeutet dies eine Anpassung der gekoppelten Größen, ohne dies an jeder Stelle eigens auszuformulieren.

Zum Teil beruht die Frequenzabhängigkeit der Intensität auf Eigenschaften der RFID-Vorrichtung 10, insbesondere einer Antennencharakteristik von Sendeantenne 14a und Empfangsantenne 14a. Einen weiteren Teil trägt der RFID-Transponder bei, dessen Transponderantenne ebenfalls eine Antennencharakteristik aufweist, so dass auch deswegen je nach aktuellem Frequenzkanal mehr oder weniger Intensität zurückkommt.

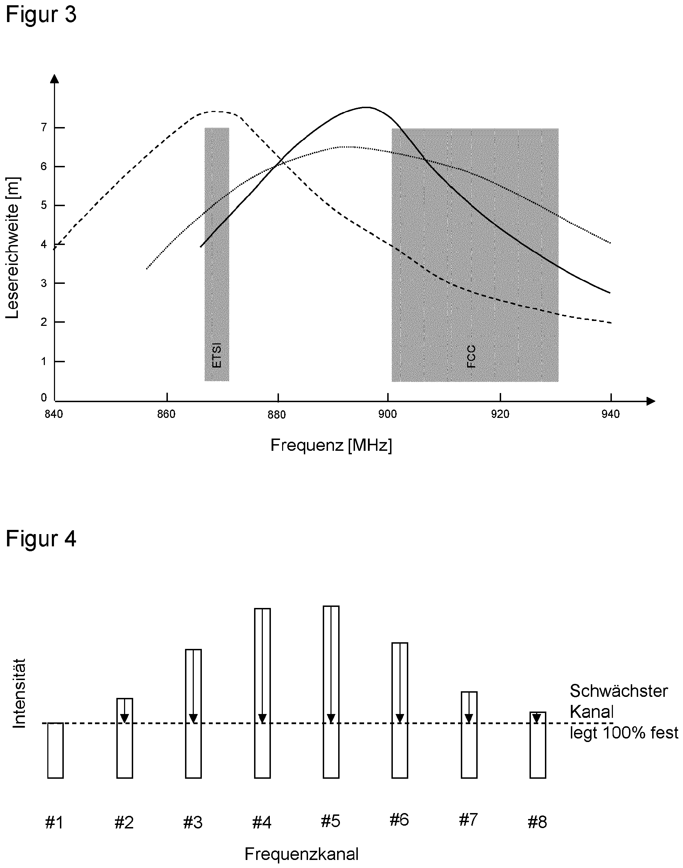

Figur 3 zeigt dazu in einer ähnlichen Darstellung wie die Figur 2 die Lesereichweite in Abhängigkeit von der Frequenz für mehrere verschiedene RFID-Transponder. Die gestrichelte Kurve entspricht einem gut abgestimmten ETSI-Transponder. Hier gäbe es wenig Handlungsbedarf, die Kurve ist schon von sich aus innerhalb des ETSI-Bandes weitgehend flach. Allerdings wäre dieser RFID-Transponder im FCC-Band nur auf kurze Reichweiten lesbar und dafür wenig geeignet. Die durchgezogene Kurve entspricht einem RFID-Transponder, der einen Kompromiss für eine globale Abstimmung zwischen ETSI-Band und FCC-Band versucht, dies aber nur um den Preis sehr hoher Variationen über die Frequenzkanäle leistet. Insbesondere gibt es im FCC-Band einen Abfall der Lesereichweite von 7 m auf 3,5 m. Die gepunktete Kurve mindert diese Effekte ein wenig, zeigt aber immer noch Werte zwischen 6,5 m und 4,5 m im FCC-Band. Aus Figur 2 könnte ein Transponder für das FCC-Band ergänzt werden, der aber trotz der engen Abstimmung auf das FCC-Band immer noch einen Abfall von 6,5 m auf 4 m zeigt.

Um eine geeignete Intensitätsanpassung zu finden, kann die Steuer- und Auswertungseinheit 18 zunächst die Frequenzcharakteristik der eigenen Antennen 14a-b ausgleichen. Für einen bestimmten Typ RFID-Vorrichtung 10 ist die Frequenzcharakteristik aus der Entwicklung bekannt, so dass die Sendeleistung kompensierend je Frequenzkanal abgesenkt oder erhöht werden kann. Eine weitere denkbare Maßnahme ist eine Anpassung der empfangsseitigen Verstärkung oder eine rechnerische empfangsseitige Kompensation beispielsweise durch Korrektur eines RSSI-Werts. Die Frequenzcharakteristik des RFID-Transponders 12 kann ebenfalls aus einem Datenblatt bekannt sein oder je Typ vermessen und dann entsprechend kompensiert werden.

Ferner ist denkbar, das RFID-System aus RFID-Vorrichtung 10 und RFID-Transponder 12 auszumessen, indem bei fester Sendeenergie mit einem bestimmten RFID-Transponder nacheinander über die verschiedenen Frequenzkanäle kommuniziert und die empfangene Intensität gemessen wird. Dadurch lassen sich Kurven wie diejenigen der Figuren 2 und 3 empirisch bestimmen. Solche Messungen können individuell für ein bestimmtes RFID-System sogar an dessen Anwendungsort, alternativ aber auch im Labor für einen bestimmten Typ RFID-Vorrichtung 10 und/oder RFID-Transponder 12 durchgeführt werden. In einer Ausführungsform ist dafür eine Einlern- oder Kalibierungsphase vorgesehen, in der diese Messungen durchgeführt werden. Alternativ geschieht dies ganz unabhängig vorab, und die Ergebnisse sind für einen bestimmten Typ RFID-Transponder 12 gespeichert. Dann kann die RFID-Vorrichtung 10 später darauf parametriert, also der Transponder-Typ eingestellt werden. In einer weiteren Alternative teilt der RFID-Transponder 12 die für die Intensitätsanpassung erforderlichen Informationen mittels RFID-Kommunikation selbst mit.

Damit sind die relativen Stärken der Frequenzkanäle bekannt, und sie können auf ein gemeinsames Niveau korrigiert werden. Es besteht noch die Freiheit, dieses gemeinsame Niveau zu wählen. Dafür gibt es wiederum verschiedene Möglichkeiten, etwa Ausnutzung der maximal erlaubten Sendeenergie mit dem Ergebnis einer maximalen Lesereichweite, die der schwächste Kanal vorgibt, ohne dass aber wie im Stand der Technik den anderen Kanälen eine Überreichweite aufgezwungen wird. Vorzugsweise wird das gemeinsame Niveau so abgestimmt, dass der schwächste Kanal eine vorgegebene Lesereichweite erzielt, wie nun an einem beispielhaften, konkreten Ausführungsbeispiel erläutert.

Figur 4 zeigt schematisch die Intensitätsanpassung in hier beispielhaft acht Frequenzkanälen. Der schwächste Frequenzkanal legt das gemeinsame Niveau fest, mit dem eine angestrebte Lesereichweite erzielt werden kann. Dazu wird beispielsweise die Sendeleistung bei Kommunikation über den schwächsten Frequenzkanal variiert, bis eine stabile Kommunikation mit einem RFID-Transponder 12 in der Lesereichweite möglich ist.

In allen anderen Frequenzkanälen wird, wie durch Pfeile angedeutet, entsprechend der bekannten Frequenzcharakteristik die Intensität herabgesetzt beziehungsweise der RSSI korrigiert. Dadurch wird auch hier nur die angestrebte Lesereichweite erreicht und eine Überreichweite vermieden. Die Abhängigkeit der Intensität und damit Lesereichweite von dem jeweils verwendeten Frequenzkanal ist eliminiert. Dabei ist eine vollständige Nivellierung wie in Figur 4 nur der angestrebte Idealzustand, auch eine nur teilweise Abflachung stellt schon einen erheblichen Vorteil dar.

Figur 4 zeigt nur ein bevorzugtes Ausführungsbeispiel. Es wäre denkbar, von dem gezeigten Abflachen sogar absichtlich abzuweichen, beispielsweise um einen Frequenzkanal zur Verfügung zu haben, der für den Bedarfsfall eine höhere Lesereichweite aufweist. Weiterhin ist es zwar vorteilhaft, aber nicht notwendig, das gemeinsame Niveau am schwächsten Kanal auszurichten.

## Patentansprüche

1. RFID-Vorrichtung (10) zum Kommunizieren mit mindestens einem RFID-Transponder (12), die einen Sender (16a), einen Empfänger (16b), eine Sendeantenne (14a) und eine Empfangsantenne (14b) zum Abstrahlen und Empfangen von RFID-Signalen sowie eine Steuer- und Auswertungseinheit (18) aufweist, wobei die Steuer- und Auswertungseinheit (18) dafür ausgebildet ist, in jeweils einem von mehreren Frequenzkanälen ein RFID-Signal auszusenden und zu empfangen,
**dadurch gekennzeichnet,**
**dass** die Steuer- und Auswertungseinheit (18) weiterhin dafür ausgebildet ist, in Abhängigkeit des für das Senden und Empfangen genutzten Frequenzkanals eine Intensitätsanpassung des RFID-Signals vorzunehmen und mittels der Intensitätsanpassung für eine vom genutzten Frequenzkanal unabhängige Intensität zu sorgen.

2. RFID-Vorrichtung (10) nach Anspruch 1,
wobei die Steuer- und Auswertungseinheit (18) dafür ausgebildet ist, gemäß einem RFID-Protokoll eine RFID-Information in das RFID-Signal zu codieren und/oder aus dem RFID-Signal auszulesen

3. RFID-Vorrichtung (10) nach Anspruch 1 oder 2,
wobei die RFID-Vorrichtung (10) für den UHF-Bereich nach ISO18000-6 ausgebildet ist.

4. RFID-Vorrichtung (10) nach einem der vorhergehenden Ansprüche,
wobei die Frequenzkanäle im ETSI- oder FCC-Band festgelegt sind.

5. RFID-Vorrichtung (10) nach einem der vorhergehenden Ansprüche,
wobei die Steuer- und Auswertungseinheit (18) dafür ausgebildet ist, eine Sendeleistung der Sendeantenne (14a) in Abhängigkeit von einer Antennencharakteristik der Sendeantenne (14a) über die Frequenzkanäle anzupassen.

6. RFID-Vorrichtung (10) nach einem der vorhergehenden Ansprüche,
wobei die Steuer- und Auswertungseinheit (18) dafür ausgebildet ist, eine Verstärkung des empfangenen RFID-Signals in Abhängigkeit von einer Antennencharakteristik der Empfangsantenne (14b) über die Frequenzkanäle anzupassen.

7. RFID-Vorrichtung (10) nach einem der vorhergehenden Ansprüche,
wobei die Steuer- und Auswertungseinheit (18) dafür ausgebildet ist, eine gemessene Intensität des empfangenen RFID-Signals oder einen RSSI-Wert anzupassen.

8. RFID-Vorrichtung (10) nach einem der vorhergehenden Ansprüche,
wobei die Steuer- und Auswertungseinheit (18) dafür ausgebildet ist, die Intensitätsanpassung in dem genutzten Frequenzkanal in Abhängigkeit einer Antennencharakteristik des RFID-Transponders (12) vorzunehmen.

9. RFID-Vorrichtung (10) nach einem der vorhergehenden Ansprüche,
wobei die Steuer- und Auswertungseinheit (18) dafür ausgebildet ist, die Intensitätsanpassung am schwächsten Frequenzkanal auszurichten.

10. RFID-Vorrichtung (10) nach einem der vorhergehenden Ansprüche,
wobei die Steuer- und Auswertungseinheit (18) dafür ausgebildet ist, die Intensität des empfangenen RFID-Signals bei Kommunikation mit einem RFID-Transponder (12) in verschiedenen Frequenzkanälen zu bestimmen.

11. RFID-Vorrichtung (10) nach einem der vorhergehenden Ansprüche,
wobei die Steuer- und Auswertungseinheit (18) dafür ausgebildet ist, eine erforderliche Intensitätsanpassung je Frequenzkanal durch Parametrierung auf einen Typ von RFID-Transpondern (12) zu bestimmen.

12. RFID-Vorrichtung (10) nach einem der vorhergehenden Ansprüche,
wobei die Steuer- und Auswertungseinheit (18) dafür ausgebildet ist, eine erforderliche Intensitätsanpassung je Frequenzkanal durch Auslesen von Intensitätsanpassungsinformationen aus einem RFID-Transponder (12) zu bestimmen.

13. Verfahren zum Kommunizieren mit mindestens einem RFID-Transponder (12), bei dem in jeweils einem von mehreren Frequenzkanälen ein Sender (16a) über eine Sendeantenne (14a) ein RFID-Signal abstrahlt und das RFID-Signal über eine Empfangsantenne (14b) in einem Empfänger (16b) empfangen wird,c:\pdf **dadurch gekennzeichnet,**
**dass** in Abhängigkeit des für das Senden und Empfangen genutzten Frequenzkanals eine Intensitätsanpassung des RFID-Signals vorgenommen und mittels der Intensitätsanpassung für eine vom genutzten Frequenzkanal unabhängige Intensität gesorgt wird.

14. Verfahren nach Anspruch 13,
wobei gemäß einem RFID-Protokoll eine RFID-Information in das ausgesandte RFID-Signal eincodiert und/oder aus dem empfangenen RFID-Signal ausgelesen wird.

15. Verfahren nach Anspruch 13 oder 14,
wobei vorab eine erforderliche Intensitätsanpassung je Intensitätskanal durch Ermitteln der Intensität des empfangenen RFID-Signals in verschiedenen Frequenzkanälen bestimmt wird.

## Claims

1. An RFID device (10) for communicating with at least one RFID transponder (12), comprising a transmitter (16a), a receiver (16b), a transmitting antenna (14a) and a receiving antenna (14b) for transmitting and receiving RFID signals, as well as a control and evaluation unit (18), wherein the control and evaluation unit (18) is configured to respectively transmit and receive an RFID signal in one of a plurality of frequency channels,
**characterized in that** the control and evaluation unit (18) is further configured to carry out an intensity adaptation of the RFID signal as a function of the frequency channel used for transmission and reception, and to ensure, by means of the intensity adaptation, an intensity that is independent of the frequency channel used.

2. The RFID device (10) according to claim 1,
wherein the control and evaluation unit (18) is configured to encode an RFID information into the RFID signal and/or read out an RFID information from the RFID signal according to an RFID protocol.

3. The RFID device (10) according to claim 1 or2,
wherein the RFID device (10) is configured for the UHF range according to ISO18000-6.

4. The RFID device (10) according to any of the preceding claims,
wherein the frequency channels are defined in the ETSI or FCC band.

5. The RFID device (10) according to any of the preceding claims,
wherein the control and evaluation unit (18) is configured to adapt a transmit power of the transmitting antenna (14a) in dependence on an antenna characteristic of the transmitting antenna (14a) via the frequency channels.

6. The RFID device (10) according to any of the preceding claims,
wherein the control and evaluation unit (18) is configured to adapt an amplification of the received RFID signal in dependence on an antenna characteristic of the receiving antenna (14b) via the frequency channels.

7. The RFID device (10) according to any of the preceding claims,
wherein the control and evaluation unit (18) is configured to adjust a measured intensity of the received RFID signal or an RSSI value.

8. The RFID device (10) according to any of the preceding claims,
wherein the control and evaluation unit (18) is configured to perform the intensity adaptation in the frequency channel used in dependence on an antenna characteristic of the RFID transponder (12).

9. The RFID device (10) according to any of the preceding claims,
wherein the control and evaluation unit (18) is configured to adapt the intensity adjustment to the weakest frequency channel.

10. The RFID device (10) according to any of the preceding claims,
wherein the control and evaluation unit (18) is configured to determine the intensity of the received RFID signal when communicating with an RFID transponder (12) in different frequency channels.

11. The RFID device (10) according to any of the preceding claims,
wherein the control and evaluation unit (18) is configured to determine a required intensity adjustment per frequency channel by parameterization to a type of RFID transponder (12).

12. The RFID device (10) according to any of the preceding claims,
wherein the control and evaluation unit (18) is configured to determine a required intensity adjustment per frequency channel by reading intensity adjustment information from an RFID transponder (12).

13. A method for communicating with at least one RFID transponder (12),
wherein in one of a plurality of frequency channels a transmitter (16a) transmits an RFID signal via a transmitting antenna (14a) and the RFID signal is received via a receiving antenna (14b) in a receiver (16b),
**characterized in that** an intensity adaptation of the RFID signal in dependence on the frequency channel used for transmission and reception is carried out, and an intensity that is independent of the frequency channel used is ensured by means of the intensity adaptation.

14. The method according to claim 13,
wherein RFID information is encoded into the transmitted RFID signal and/or read from the received RFID signal according to an RFID protocol.

15. The method according to claim 13 or 14,
wherein a required intensity adjustment per intensity channel is determined in advance by determining the intensity of the received RFID signal in different frequency channels.

## Revendications

1. Dispositif RFID (10) pour communiquer avec au moins un transpondeur RFID (12), comprenant un émetteur (16a), un récepteur (16b), une antenne d'émission (14a) et une antenne de réception (14b) pour l'émission et la réception de signaux RFID, ainsi qu'une unité de commande et d'évaluation (18), dans lequel l'unité de commande et d'évaluation (18) est configurée pour émettre et recevoir un signal RFID dans un canal respectif parmi plusieurs canaux de fréquence,
**caractérisé en ce que**
l'unité de commande et d'évaluation (18) est en outre configurée pour effectuer une adaptation de l'intensité du signal RFID en fonction du canal de fréquence utilisé pour l'émission et la réception, et pour assurer, au moyen de l'adaptation de l'intensité, une intensité qui est indépendante du canal de fréquence utilisé.

2. Dispositif RFID (10) selon la revendication 1,
dans lequel l'unité de commande et d'évaluation (18) est configurée pour coder, conformément à un protocole RFID, une information RFID dans le signal RFID et/ou lire une information RFID à partir du signal RFID.

3. Dispositif RFID (10) selon la revendication 1 ou 2,
dans lequel le dispositif RFID (10) est configuré pour la gamme UHF selon ISO18000-6.

4. Dispositif RFID (10) selon l'une des revendications précédentes,
dans lequel les canaux de fréquence sont définis dans la bande ETSI ou FCC.

5. Dispositif RFID (10) selon l'une des revendications précédentes,
dans lequel l'unité de commande et d'évaluation (18) est configurée pour adapter une puissance d'émission de l'antenne d'émission (14a) en fonction d'une caractéristique d'antenne de l'antenne d'émission (14a) via les canaux de fréquence.

6. Dispositif RFID (10) selon l'une des revendications précédentes,
dans lequel l'unité de commande et d'évaluation (18) est configurée pour adapter une amplification du signal RFID reçu en fonction d'une caractéristique d'antenne de l'antenne de réception (14b) via les canaux de fréquence.

7. Dispositif RFID (10) selon l'une des revendications précédentes,
dans lequel l'unité de commande et d'évaluation (18) est configurée pour ajuster une intensité mesurée du signal RFID reçu ou une valeur RSSI.

8. Dispositif RFID (10) selon l'une des revendications précédentes,
dans lequel l'unité de commande et d'évaluation (18) est configurée pour effectuer l'adaptation de l'intensité dans le canal de fréquence utilisé en fonction d'une caractéristique d'antenne du transpondeur RFID (12).

9. Dispositif RFID (10) selon l'une des revendications précédentes,
dans lequel l'unité de commande et d'évaluation (18) est configurée pour adapter le réglage de l'intensité au canal de fréquence le plus faible.

10. Dispositif RFID (10) selon l'une des revendications précédentes,
dans lequel l'unité de commande et d'évaluation (18) est configurée pour déterminer l'intensité du signal RFID reçu lors de la communication avec un transpondeur RFID (12) dans différents canaux de fréquence.

11. Dispositif RFID (10) selon l'une des revendications précédentes,
dans lequel l'unité de commande et d'évaluation (18) est configurée pour déterminer un ajustement d'intensité nécessaire par canal de fréquence par paramétrage sur un type de transpondeur RFID (12).

12. Dispositif RFID (10) selon l'une des revendications précédentes,
dans lequel l'unité de commande et d'évaluation (18) est configurée pour déterminer un ajustement d'intensité nécessaire par canal de fréquence en lisant les informations d'ajustement d'intensité d'un transpondeur RFID (12).

13. Procédé pour communiquer avec au moins un transpondeur RFID (12), dans lequel un émetteur (16a) émet un signal RFID via une antenne d'émission (14a) dans un canal respectif parmi plusieurs canaux de fréquence et le signal RFID est reçu via une antenne de réception (14b) dans un récepteur (16b), **caractérisé en ce qu'**une adaptation de l'intensité du signal RFID en fonction du canal de fréquence utilisé pour l'émission et la réception est effectuée, et au moyen de l'adaptation de l'intensité, une intensité indépendante du canal de fréquence utilisé est assurée.

14. Procédé selon la revendication 13,
dans lequel, conformément à un protocole RFID, une information RFID est codée dans le signal RFID émis et/ou lue à partir du signal RFID reçu.

15. Procédé selon la revendication 13 ou 14,
dans lequel un ajustement d'intensité nécessaire par canal d'intensité est déterminé au préalable en déterminant l'intensité du signal RFID reçu dans différents canaux de fréquence.
